# EUROPEAN PATENT SPECIFICATION

(11) **EP 4 343 980 B1**
(45) Date of publication and mention of the grant of the patent: **21.10.2026**
(21) Application number: 23178899.3
(22) Date of filing: 13.06.2023
(51) Int. Cl.: H01R 13/52, H01R 43/00, B29C 45/14, B29C 45/16

(54) **WIRE SEAL ASSEMBLY**
DRAHTDICHTUNGSBAUGRUPPE
ENSEMBLE DE JOINT D'ÉTANCHÉITÉ POUR FIL

(30) Priority: 14.06.2022 US 202217840160; 08.06.2023 US 202318207360
(43) Date of publication of application: 27.03.2024
(73) Proprietor: Aptiv Technologies AG, 8200 Schaffhausen (CH)
(72) Inventor: FARRELL, Jack, Streetsboro, OH 44241 (US); PENN, Matthew L., Cortland, OH 44410 (US); DROESBEKE, Gert, 40699 Erkrath (DE)
(74) Representative: Bardehle Pagenberg Partnerschaft mbB Patentanwälte Rechtsanwälte

(56) References cited:
- JP-A- H04 284 383
- JP-A- H09 147 965
- US-A1- 2006 019 535
- US-A1- 2014 008 122
- US-A1- 2018 351 286
- US-A1- 2021 057 845

## Description

This disclosure is generally directed to sealed electrical connectors and more particularly to an electrical connector having a wire seal that provides a secondary terminal locking mechanism.

In many applications, it is necessary to mount electrical cables to terminals or connector housings and to seal the connection against environmental contaminants, such as moisture, dust, etc. To this end so-called single wire seals are known in the art, which are arranged onto the cable sheath, and which provide a seal between the cable and inner walls of the terminal or the connector housing.

A typical prior art document dealing with elastic single wire seals is U.S. Patent No. 4,895,533. This document discloses a waterproof plug for a connector. The waterproof plug comprises a rubber plug having an outer tube portion capable of fitting to an inner wall of a connector housing, a stabilizing tube having rigidity mounted next to the outer tube portion of said rubber plug, and an electric wire inserting hole in the central portion thereof. Another prior art document dealing with elastic single wire seals is German Patent No. DE 19 828 482 A1 disclosing a single wire seal for sealing a gap between a conductor and a connector housing. A reinforcement region is joined to a sealing region of a sealing body. Further, reinforcement ribs are connected on a first side to a hollow cylindrical base of the reinforcement region, and on an adjacent second side to a sealing lip.

US 2006 019535 A1 discloses a waterproof connector including annular plug receiving chambers formed within a connector housing in surrounding relation respectively to outer peripheral surfaces of insulating sheaths of wires, and are disposed adjacent respectively to terminal receiving chambers in a longitudinal direction of the wires, plugs received respectively in the plug receiving chambers, and a cover attached to the connector housing from a side of the other end portions of the wires, covering the plug receiving chambers.

JP H09 147965 relates to a waterproof connector that ensures the waterproof performance inside a housing by using a gasket tightly attached to an electric device. JP H04 284383 A relates to a waterproof connector used in automobiles and the like, and a method for assembling the connector.

US 2014/008122 A1 relates to a wire holding device for holding an electric wire while sealing a gap between an attachment hole formed on an attachment target (or attached member) and the electric wire.

US 2021/057845 A1 relates to a seal part including an elastic body that is in close contact with outer peripheral surfaces of a plurality of wires and an inner peripheral surface of a wire accommodation portion, and a rigid body that has an outer peripheral surface disposed to face the inner peripheral surface of the wire accommodation portion.

Lateral compression of the seal is necessary for forming a seal between the wire cable and the connector housing. However, such a cable seal can also be longitudinally compressed causing unwanted movement of the terminal in the connector housing that can cause intermittent electrical disconnection and/or fretting corrosion of the terminal. Therefore, a cable seal that reduces or eliminates longitudinal compression while still allowing lateral compression remains desired.

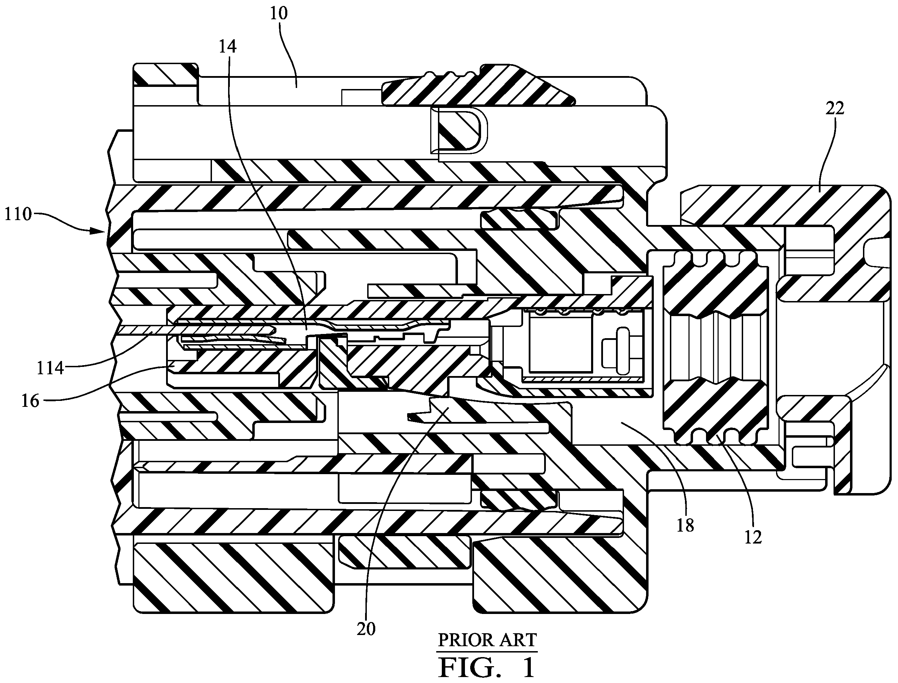

FIG. 1 shows an example of an existing electrical connector 10 that is engaged with a mating electrical connector 110. The electrical connector 10 of Fig 1 has a compliant wire seal 12 that is configured to surround a wire (not shown) attached to a terminal 14 disposed within a terminal module 16 in the connector's housing 18. The terminal module 16 is retained within the housing 18 by a primary locking mechanism 20 in the form of a cantilevered arm that extends from the housing 18 and engages the terminal module 16. The wire seal 12 is disposed between the terminal module 16 and a wire seal retainer 22. The wire seal 12 provides a secondary locking mechanism that inhibits the terminal module 16 from being forced from the connector housing 18 in the event of a failure of the primary locking mechanism 20. However, because the wire seal 12 is made from a compliant material in order to seal against the walls of the housing 18 and the wire, the terminal module 16 may still be subject to longitudinal motion due to longitudinal compression of the wire seal 12 when a force is applied to the terminal 14 or the wire.

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches. The above objects are at least partially achieved by the subject matter of independent claim 1.

According to the invention, a wire seal assembly configured to seal a wire cable to a connector housing of an electrical connector includes a seal reinforcement device configured to be substantially rigid along a first axis, a compliant cable seal disposed within the seal reinforcement device and configured to be in compressive contact with the wire cable, and a compliant housing seal axially surrounding the seal reinforcement device and configured to be in compressive contact with the connector housing.

According to the invention, the seal reinforcement device is flexible along a second axis substantially perpendicular to the first axis.

According to the invention, the seal reinforcement device includes a plurality of cylindrical sectors arranged opposite one another and a plurality of resilient spring features joining the plurality of cylindrical sectors.

According to the invention, the plurality of resilient spring features include a pair of flexible beams that are joined at one end to form a V-shape and each of the opposite ends are attached to one of the cylindrical sectors.

In some aspects of the wire seal assembly described in any one of the preceding paragraphs, the plurality of resilient spring features are integrally formed with the plurality of cylindrical sectors.

In some aspects of the wire seal assembly described in any one of the preceding paragraphs, the seal reinforcement device is formed from a material selected from a list consisting of polyamide, polybutylene terephthalate, and acrylonitrile butadiene styrene, with or without glass filling.

In some aspects of the wire seal assembly described in any one of the preceding paragraphs, the seal reinforcement device is formed from a polymeric material having a Shore A hardness greater than 75.

In some aspects of the wire seal assembly described in any one of the preceding paragraphs, the cable seal and the housing seal are integrally formed.

In some aspects of the wire seal assembly described in any one of the preceding paragraphs, the cable seal and the housing seal are formed from a silicone rubber material.

In some aspects of the wire seal assembly described in any one of the preceding paragraphs, the cable seal and the housing seal are formed from a compliant polymeric material having a Shore A hardness in a range of 35 to 45.

In some aspects of the wire seal assembly described in any one of the preceding paragraphs, a material forming the seal reinforcement device has a Shore A harness at least 20 points higher than a material forming the cable seal and the housing seal.

In some aspects of the wire seal assembly described in any one of the preceding paragraphs, the seal reinforcement device extends beyond ends of the cable seal and the housing seal.

In some aspects of the wire seal assembly described in any one of the preceding paragraphs, the seal reinforcement device is flush with ends of the cable seal and the housing seal.

In some aspects of the wire seal assembly described in any one of the preceding paragraphs, the seal reinforcement device has a generally cylindrical shape.

According to the invention, a method of manufacturing a wire seal assembly includes injecting a rigid polymeric material having a shore A hardness of at least 75 when cured into a mold to form a seal reinforcement device and injecting a compliant polymeric material having a shore A hardness in a range of 35 to 45 when cured into a mold to form a cable seal within the seal reinforcement device and a housing seal around the seal reinforcement device.

In some aspects of the method described in the preceding paragraph, the polymeric material is selected from a list consisting of polyamide, polybutylene terephthalate, and acrylonitrile butadiene styrene, with or without glass filling.

In some aspects of the method described in any one of the preceding paragraphs, the compliant polymeric material is a silicone rubber material.

According to one or more aspects of the present disclosure, an electrical connector is manufactured by a process including:
- providing an electrical terminal attached to a wire;
- inserting the electrical terminal within a terminal module having a wire seal assembly with a seal reinforcement device configured to be substantially rigid along a first axis and flexible along a second axis substantially perpendicular to the first axis;
- securing the terminal module within a connector housing via a primary locking mechanism;
- expanding the seal reinforcement device along the second axis, inserting the wire within a wire seal assembly;
- contracting the seal reinforcement device along the second axis such that a cable seal of the wire seal assembly is sealingly engaged with the wire;
- inserting the wire seal assembly within the connector housing such that a housing seal of the wire seal assembly is sealingly engaged with the connector housing and an end of a seal reinforcement device in the wire seal assembly is in contact with the terminal module; and
- attaching a wire seal retainer to the connector housing such that another end of the seal reinforcement device is in contact with the wire seal retainer.

The wire seal retainer is configured to maintain compressive contact between the wire seal assembly and the terminal module, thereby providing a secondary locking mechanism for the terminal module.

In some aspects of the electrical connector described in the preceding paragraph, the wire seal assembly is formed by: injecting a rigid polymeric material having a shore A hardness of at least 75 when cured into a mold to form a seal reinforcement device; and injecting a compliant polymeric material having a shore A hardness in a range of 35 to 45 when cured into a mold to form a cable seal within the seal reinforcement device and a tubular housing seal around the seal reinforcement device.

In some aspects of the electrical connector described in any one of the preceding paragraphs, the rigid polymeric material is selected from a list consisting of polyamide, polybutylene terephthalate, and acrylonitrile butadiene styrene, with or without glass filling and wherein the compliant polymeric material is a silicone rubber material.

The present invention will now be described, by way of example with reference to the accompanying drawings, in which:
FIG. 1 illustrates a cross-section view of an electrical connector according to the prior art;
FIG. 2 illustrates a cross-section view of an electrical connector according to some embodiments not according to the claimed invention;
FIG. 3 illustrates an isometric view of a wire seal assembly of the electrical connector of FIG. 2 according to some embodiments not according to the claimed invention;
FIG. 4 illustrates a cross-section view of the wire seal assembly of FIG. 3 according to some embodiments not according to the claimed invention;
FIG. 5A illustrates close-up cross section view of a terminal of the electrical connector of FIG. 1 according to the prior art;
FIG. 5B illustrates a close-up cross section view of a terminal of the electrical connector of FIG. 2 according to some embodiments not according to the claimed invention;
FIG. 6 illustrates a graph comparing terminal pull out forces of the electrical connector of FIG. 1 to the electrical connector of FIG. 2;
FIG. 7 illustrates an isometric view of a seal reinforcement device of the wire seal assembly of FIG. 3 according to some embodiments not according to the claimed invention;
FIG. 8 illustrates a cross-section view of a wire seal assembly according to some embodiments not according to the claimed invention;
FIG. 9 illustrates a flow chart of a method of manufacturing a wire seal assembly according to some embodiments;
FIG. 10 illustrates a flow chart of a process of forming an electrical connector according to some embodiments;
FIG. 11 illustrates a cross-section view of an electrical connector according to some embodiments;
FIG. 12 illustrates an isometric view of a wire seal assembly of the electrical connector of FIG. 11 according to some embodiments;
FIG. 13 illustrates a cross-section view of the wire seal assembly of FIG. 11 according to some embodiments; and
FIG. 14 illustrates an isometric view of a seal reinforcement device of the wire seal assembly of FIG. 11 according to some embodiments.

This patent application is directed to a sealed electrical connector having primary and secondary locking mechanisms to retain a terminal module within a housing.

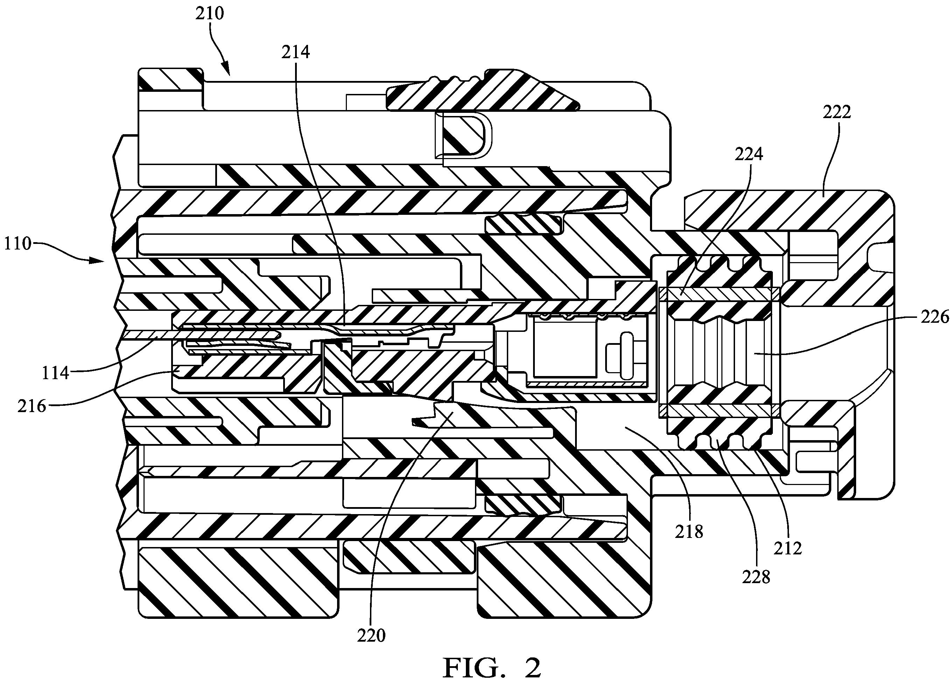

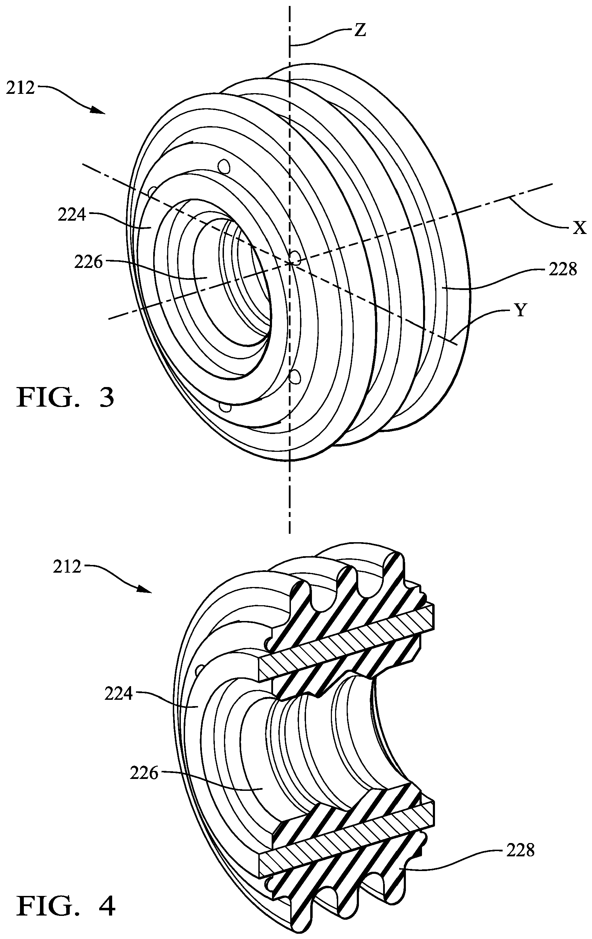

The electrical connector 210 shown in FIG. 2 has a similar configuration to the electrical connector 10 discussed in the BACKGROUND section and shown in FIG. 1. However, the construction and function of the wire seal assembly 212 in electrical connector 210 is different. The wire seal assembly 212 of the electrical connector 210 is an assembly that includes a seal reinforcement device 224 in the form of a rigid tube having a cylindrical cable seal 226 inside the seal reinforcement device 224 as shown in FIGs. 3 and 4. As used herein, the term "rigid" means that the material forming the seal reinforcement device 224 has a Shore A hardness that is greater than or equal to 75. The cable seal 226 is configured to seal a wire attached to an electrical terminal 214. The wire seal assembly 212 also includes a cylindrical housing seal 228 located on the outside of the seal reinforcement device 224 that is configured to seal the seal reinforcement device 224 to the connector housing 218. The seal reinforcement device 224 is disposed between the terminal module 216 and the wire seal retainer 222 and is held in compressive contact between them. The seal reinforcement device 224 inhibits the terminal module 216 from being forced from the connector housing 218 in the event of a failure of the primary locking mechanism 220 and the rigidity also inhibits longitudinal motion of the terminal module 216 if a longitudinal force is applied to the electrical terminal 214, the terminal module 216, or the wire attached to the electrical terminal 214. The wire seal assembly 212 also provides better mechanical performance of the secondary locking mechanism by increasing the force necessary to defeat the secondary lock as well as reducing the distance the terminal module 216 can travel before the secondary lock is engaged.

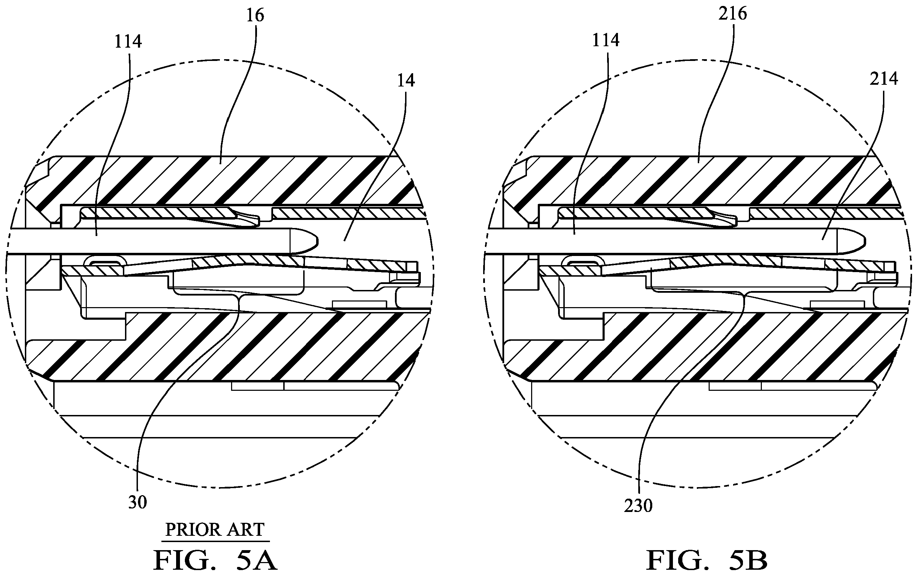

The wire seal assembly 212 ensures a more robust connection between the electrical terminal 214 in the electrical connector 210 and the mating terminal 114 in the mating connector 110. In the event that the primary locking mechanism 220 is damaged or otherwise defeated, the wire seal assembly 212 does not longitudinally compress against the wire seal retainer 222, thereby maintaining the terminal overlap 230 between the electrical terminal 214 in the electrical connector 210 and the mating terminal 114 in the mating connector 110, as shown in FIG. 5B. In comparison, in the event that the primary locking mechanism 20 is damaged or otherwise defeated, the wire seal assembly 12 may be longitudinally compressed against the retainer 22 such that the terminal overlap 30 between the terminal 14 in the electrical connector 10 and the mating terminal 114 in the mating connector 110, as shown in FIG. 5A, is less than the terminal overlap 230.

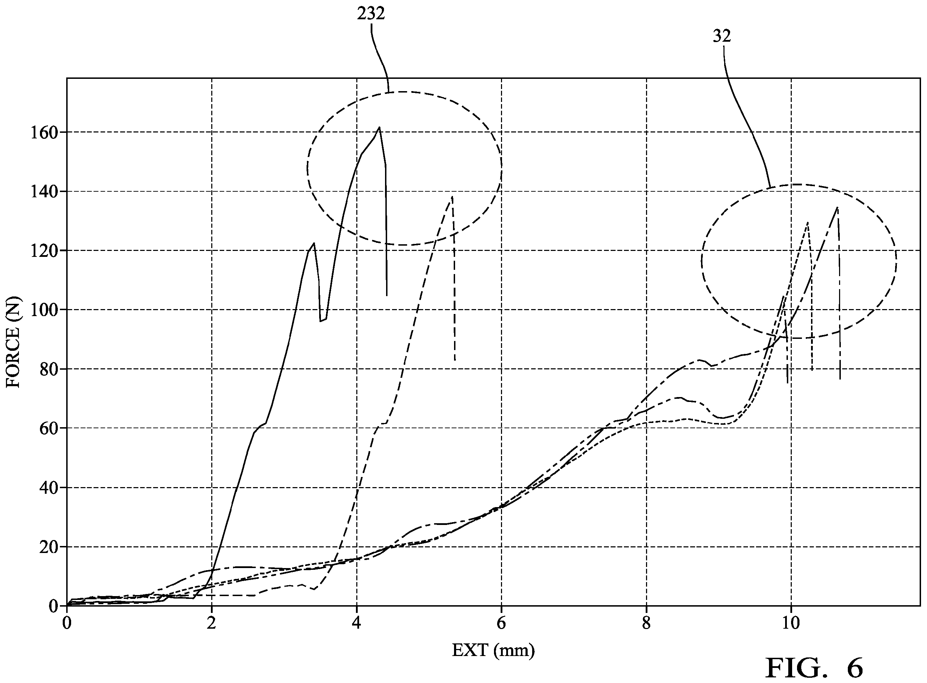

As shown in FIG. 6, a displacement force 232 required to dislodge the terminal module 216 from the connector housing 218 after the primary locking mechanism 220 of the electrical connector 210 has failed is greater than a displacement force 32 required to dislodge the terminal module 16 from the connector housing 18 after the primary locking mechanism 20 of the connector 10 has failed. FIG. 6 also shows that the displacement force 232 of the terminal module 216 of the electrical connector 210 prior to reaching the dislodging force level is less than the displacement force 32 of the terminal module 16 of the connector 10.

The seal reinforcement device 224 may extend beyond the ends of the cable seal 226 and the housing seal 228 or may be flush with the ends of cable seal 226 and the housing seal 228. In another embodiment, the seal reinforcement device 224 may extend beyond one end of the cable seal 226 and the housing seal 228 and may be flush with the other end of the cable seal 226 and the housing seal 228. The seal reinforcement device 224 of the wire seal assembly 212 provides the benefit of more uniform contact with the terminal module 216 compared with the seal of U.S. Patent No. 10,148,032. In addition, the wire seal assembly 212 beneficially provides more uniform sealing between the seal and the cable and the seal and the connector due to the uniform thickness of compliant material in the cable seal 226 and the housing seal 228 that is not present in the previous design. As used herein, the term "compliant" means that the material has a Shore A hardness less than or equal to 45. Further, the seal reinforcement device 224 is more easily co-molded with the cable seal 226 and the housing seal 228 than the separate posts and the seal of US Patent No. 10,148,032.

The seal reinforcement device 224 may be formed from a material selected from an engineered polymer, such as polyamide (NYLON), polybutylene terephthalate (PBT), or acrylonitrile butadiene styrene (ABS) plastic. The plastic material may or may not include glass filling. The material forming the seal reinforcement device 224 has a Shore A hardness greater than 75.

The cable seal 226 and the housing seal 228 may be formed from a silicone rubber material having a Shore A hardness in a range of 35 to 45, preferably about 40. The material forming the seal reinforcement device 224 preferably has a Shore A hardness at least 20 points higher than the material forming the cable seal 226 and the housing seal 228.

The wire seal assembly 212 may be manufactured using co-molding techniques to form the seal reinforcement device 224, the cable seal 226, and the housing seal 228.

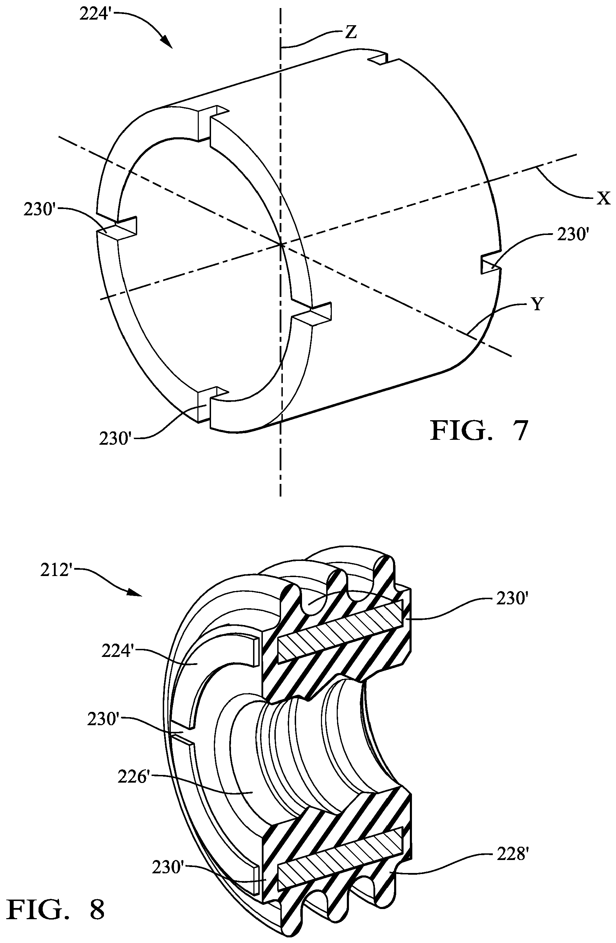

In an alternative embodiment of the wire seal assembly 212' shown in FIGs. 7 and 8, the cable seal 226' and the housing seal 228' may be integrally formed by defining a plurality of notches 230' or other apertures in the seal reinforcement device 224' so that the compliant material may flow from the outside of the seal reinforcement device 224' to the inside of the seal reinforcement device 224' or vice versa, when the compliant material forming the cable seal 226' and the housing seal 228' is co-molded with the seal reinforcement device 224'. In the illustrated example, the plurality of notches 230' are defined in the ends of the seal reinforcement device 224' and are spaced about 90 degrees apart.

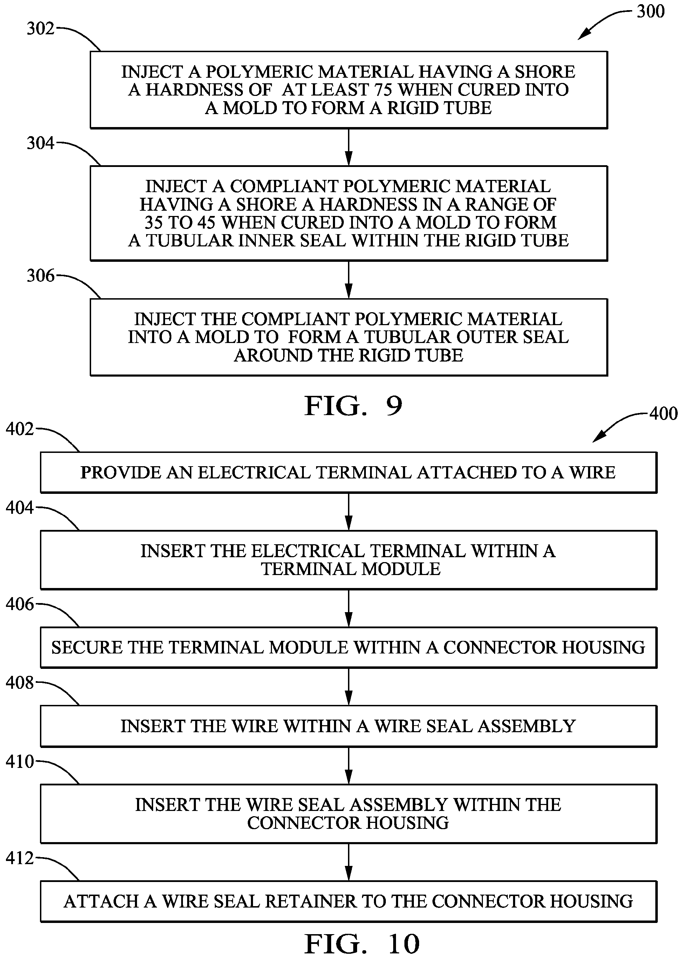

A method 300 of manufacturing a wire seal assembly 212 is illustrated in FIG. 9. The method 300 includes the following steps:

STEP 302, INJECT A POLYMERIC MATERIAL HAVING A SHORE A HARDNESS OF AT LEAST 75 WHEN CURED INTO A MOLD TO FORM A SEAL REINFORCEMENT DEVICE, includes injecting a polymeric material having a shore A hardness of at least 75 when cured into a mold to form a seal reinforcement device 224;

STEP 304, INJECT A COMPLIANT POLYMERIC MATERIAL HAVING A SHORE A HARDNESS IN A RANGE OF 35 TO 45 WHEN CURED INTO A MOLD TO FORM A TUBULAR CABLE SEAL WITHIN THE SEAL REINFORCEMENT DEVICE, includes injecting a compliant polymeric material having a shore A hardness in a range of 35 to 45 when cured into a mold to form a tubular cable seal 226 within the seal reinforcement device 224; and

STEP 306, INJECT THE COMPLIANT POLYMERIC MATERIAL INTO A MOLD TO FORM A TUBULAR HOUSING SEAL AROUND THE SEAL REINFORCEMENT DEVICE, includes injecting the compliant polymeric material into a mold to form a tubular housing seal 228 around the seal reinforcement device 224.

The seal reinforcement device 224 may extend beyond the ends of the cable seal 226 and the housing seal 228 or may be flush with the ends of the cable seal 226 and the housing seal 228. In another embodiment, the seal reinforcement device 224 may extend beyond one end of the cable seal 226 and the housing seal 228 and may be flush with the other end of the cable seal 226 and the housing seal 228.

The polymeric material used to form the seal reinforcement device 224 may be an engineered polymer such as polyamide (PA, NYLON), polybutylene terephthalate (PBT), and acrylonitrile butadiene styrene (ABS). The polymeric material used to form the seal reinforcement device 224 may or may not be glass fiber filled. The compliant polymeric material used to form the cable and housing seals 226, 228 may be a silicone rubber material.

A process 400 of manufacturing an electrical connector 210 is illustrated in FIG. 10. The process 400 includes the following steps:

STEP 402, PROVIDE AN ELECTRICAL TERMINAL ATTACHED TO A WIRE, includes providing an electrical terminal 214 attached to a wire;

STEP 404, INSERT THE ELECTRICAL TERMINAL WITHIN A TERMINAL MODULE, includes inserting the electrical terminal 214 within a terminal module 216;

STEP 406, SECURE THE TERMINAL MODULE WITHIN A CONNECTOR HOUSING, includes securing the terminal module 216 within a connector housing 218 via a primary locking mechanism 220;

STEP 408, INSERT THE WIRE WITHIN A WIRE SEAL ASSEMBLY, includes inserting the wire within a wire seal assembly 212 such that a cable seal 226 of the wire seal assembly 212 is sealingly engaged with the wire;

STEP 410, INSERT THE WIRE SEAL ASSEMBLY WITHIN THE CONNECTOR HOUSING, includes inserting the wire seal assembly 212 within the connector housing 218 such that a housing seal 228 of the wire seal assembly 212 is sealingly engaged with the connector housing 218 and an end of a seal reinforcement device 224 in the wire seal assembly 212 is in contact with the terminal module 216; and

STEP 412, ATTACH A WIRE SEAL RETAINER TO THE CONNECTOR HOUSING, includes attaching a wire seal retainer 222 to the connector housing 218 such that another end of the seal reinforcement device 224 is in contact with the wire seal retainer 222. The wire seal retainer 222 is configured to maintain compressive contact between the wire seal assembly 212 and the terminal module 216, thereby providing a secondary locking mechanism for the terminal module 216.

The wire seal assembly 212 may be formed by the method 300 described above.

The polymeric material used to form the seal reinforcement device 224 may be an engineered polymer such as polyamide (PA, NYLON), polybutylene terephthalate (PBT), and acrylonitrile butadiene styrene (ABS). The polymeric material used to form the seal reinforcement device 224 may or may not be glass fiber filled. The compliant polymeric material used to form the cable and housing seals 226, 228 may be a silicone rubber material.

The seal reinforcement device 224 may extend beyond the ends of the cable seal 226 and the housing seal 228 or may be flush with the ends of the cable seal 226 and the housing seal 228. In another embodiment, the seal reinforcement device 224 may extend beyond one end of the cable seal 226 and the housing seal 228 and may be flush with the other end of the cable seal 226 and the housing seal 228.

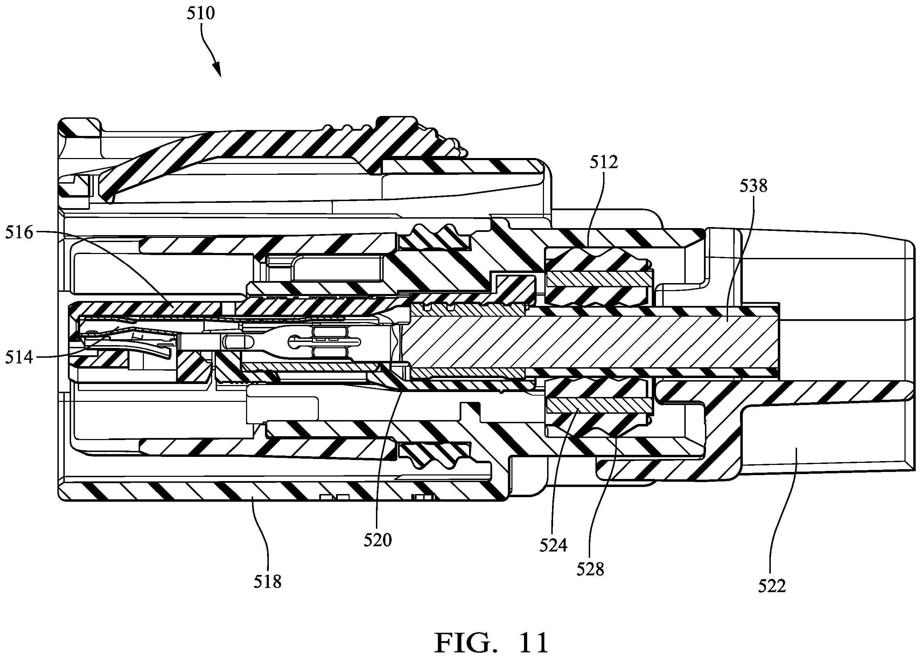

The electrical connector 510 shown in FIG. 11 has a similar configuration to the electrical connector 210 described above and shown in FIG. 2. However, the construction of the wire seal assembly 512 in accordance with the inventionin electrical connector 510 is different. The wire seal assembly 512 in accordance with the invention of the electrical connector 510 is an assembly that includes a seal reinforcement device 524 that provides anti-longitudinal compression features similar to the seal reinforcement device 224 of the electrical connector 210. Wherein the seal reinforcement device 224 is substantially rigid along three orthogonal axes X, Y, Z, the seal reinforcement device 524 is flexible along at least one of three orthogonal axes.

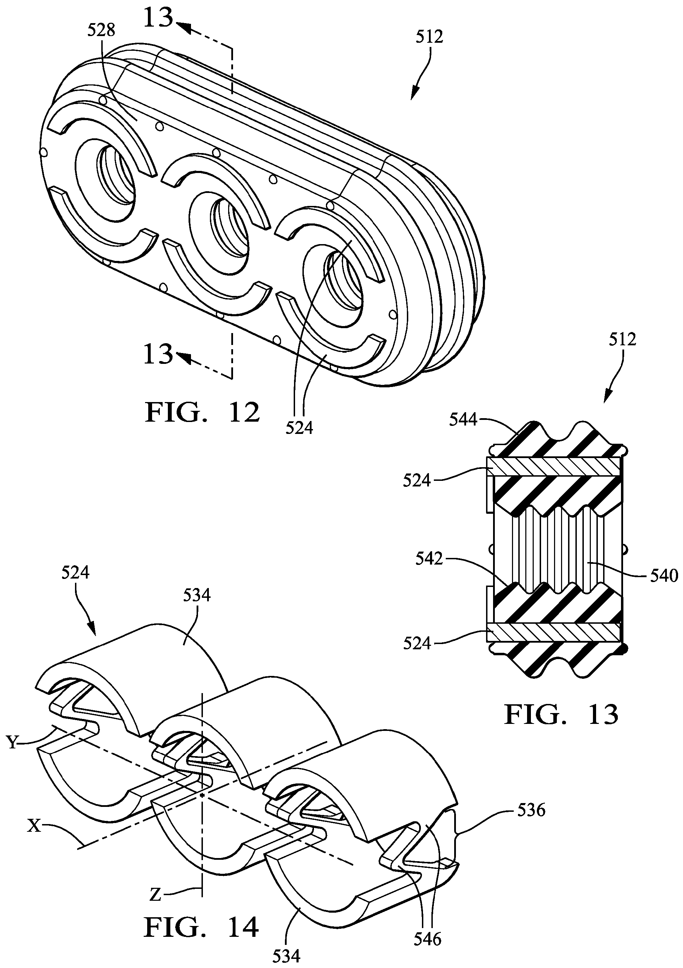

The example of the wire seal assembly shown in FIG. 12 contains a plurality of the seal reinforcement device 524 to accompany a plurality of wire cables 538. As shown in FIG. 13, the wire seal assembly 512 in accordance with the invention also includes a seal 528 that forms a cable seal 542 having a plurality of wire seal passages 540 inside the seal reinforcement devices 524 and a housing seal 544 outside of the seal reinforcement devices 524. The seal 528 is formed of a compliant and resilient elastomeric material, such as a silicone rubber.

As shown in FIG. 14, the seal reinforcement device 524 has a generally cylindrical shape and is formed by two or more cylindrical sectors 534 that are joined by a two or more flexible and resilient spring features 536 that allow a diameter of the seal reinforcement device 524 to increase to along at least one axis Y or Z to facilitate insertion of a wire cable 538 through the wire seal assembly 512 in accordance with the invention and then decrease back to its original diameter once the wire cable 538 has been inserted into the wire seal assembly 512 in accordance with the invention. In the illustrated example of the seal reinforcement device 524, the flexible spring features 536 are integrally formed with the cylindrical sectors 534.

Each of the resilient spring features 536 are made up of a pair of flexible beams 546 that are joined at one end to form a V-shape and each of the opposite ends are attached to one of the cylindrical sectors 534. Without subscribing to any particular theory of operation, the resilient properties of the beams 546 and the seal 528 cooperate to allow the wire seal passages 540 to expand as a wire cable 538 is inserted within the wire seal passage 540, preferably with the assistance of an expansion tool (not shown). Once the wire cable 538 is inserted within the wire seal passage 540 and the expansion tool is removed from the wire seal passage 540. The flexible nature of the beams 546 and the compliant priorities of the seal 528 cooperate to urge the wire seal passage 540 to contact back to its original configuration.

Although the illustrated example of the wire seal assembly 512 in accordance with the invention has a plurality of seal reinforcement devices 524 and wire seal passages 540, other examples of the wire seal assembly may have a wire seal assembly with a single reinforcement device 524 and wire seal passage 540.

The seal reinforcement device 524 is disposed between the terminal module 516 and the wire seal retainer 522 and is held in compressive contact between them. The seal reinforcement device 524 inhibits the terminal module 516 from being forced from the connector housing 518 in the event of a failure of the primary locking mechanism 520 and also inhibits longitudinal motion of the terminal module 516 if a longitudinal force is applied to the terminal 514, the terminal module 516, or the wire attached to the terminal 514. The wire seal assembly 512 in accordance with the invention also provides better mechanical performance of the secondary locking mechanism by both increasing the force necessary to defeat the secondary lock and reducing the distance the terminal module 516 can travel before the secondary lock is engaged.

The wire seal assembly 512 in accordance with the invention ensures a more robust connection between the terminal 514 in the electrical connector 510 and a mating terminal in a mating connector (not shown). In the event that the primary locking mechanism 520 is damaged or otherwise defeated, the wire seal assembly 512 in accordance with the invention does not longitudinally compress against the wire seal retainer 522, thereby maintaining the terminal overlap between the terminal 514 in the electrical connector 510 and the mating terminal in the mating connector.

The seal reinforcement device 524 may extend beyond the ends of the seal 528 or may be flush with the ends of the seal 528. In another embodiment, the seal reinforcement device 524 may extend beyond one end of the seal 528 and may be flush with the seal 528. The seal reinforcement device 524 of the wire seal assembly 512 in accordance with the invention provides the benefit of uniform contact with the terminal module 516. As used herein, the term "compliant" means that the material has a Shore A hardness less than or equal to 45. Further, the seal reinforcement device 524 is more easily co-molded with the seal 528 than the separate posts and the seal of US Patent No. 10,148,032.

The seal reinforcement device 524 may be formed from an engineered polymer, such as polyamide (NYLON), polybutylene terephthalate (PBT), or acrylonitrile butadiene styrene (ABS) plastic. The plastic material may or may not include glass filling. The material forming the seal reinforcement device 524 has a Shore A hardness greater than 75.

The seal 528 may be formed from a silicone rubber material having a Shore A hardness in a range of 35 to 45, preferably about 40. The material forming the seal reinforcement device 524 preferably has a Shore A hardness at least 20 points higher than the material forming the seal 528.

The wire seal assembly 212 may be manufactured using co-molding techniques to form the seal reinforcement device 224, the cable seal 226, and the housing seal 228.

While the invention has been described with reference to an exemplary embodiment(s), it will be understood by those skilled in the art that various changes may be made. Therefore, it is intended that the invention is not limited to the disclosed embodiment(s), but that the invention will include all embodiments falling within the scope of the appended claims.

As used herein, 'one or more' includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Additionally, while terms of ordinance or orientation may be used herein these elements should not be limited by these terms. All terms of ordinance or orientation, unless stated otherwise, are used for purposes distinguishing one element from another, and do not denote any particular order, order of operations, direction or orientation unless stated otherwise.

## Claims

1. A wire seal assembly (512) configured to seal a wire cable (538) to a connector housing (518) of an electrical connector (510), comprising:
a seal reinforcement device (524) configured to be substantially rigid along a first axis (X) and flexible along a second axis (Y, Z) substantially perpendicular to the first axis (X), wherein the seal reinforcement device (524) comprises a plurality of cylindrical sectors (534) arranged opposite one another and a plurality of resilient spring features joining the plurality of cylindrical sectors (534) and
a compliant cable seal (542) disposed within the seal reinforcement device (524) and configured to be in compressive contact with the wire cable (538); and
a compliant housing seal (544) axially surrounding the seal reinforcement device (524) and configured to be in compressive contact with the connector housing (518), **characterized in that**
the plurality of resilient spring features include a pair of flexible beams (546) that are joined at one end to form a V-shape and each of the opposite ends are attached to one of the cylindrical sectors (534).

2. The wire seal assembly (512) in accordance with claim 1, wherein the plurality of resilient spring features are integrally formed with the plurality of cylindrical sectors (534).

3. The wire seal assembly (512) in accordance with any one of the preceding claims, wherein the seal reinforcement device (524) is formed from a material selected from a list consisting of polyamide, polybutylene terephthalate, and acrylonitrile butadiene styrene, with or without glass filling.

4. The wire seal assembly (512) in accordance with any one of the preceding claims wherein the seal reinforcement device (524) is formed from a polymeric material having a Shore A hardness greater than 75.

5. The wire seal assembly (512) in accordance with any one of the preceding claims wherein the cable seal (542) and the housing seal (544) are integrally formed.

6. The wire seal assembly (512) in accordance with any one of the preceding claims wherein the cable seal (542) and the housing seal (544) are formed from a compliant polymeric material having a Shore A hardness in a range of 35 to 45.

7. The wire seal assembly (512) in accordance with any one of the preceding claims, wherein a material forming the seal reinforcement device (524) has a Shore A harness at least 20 points higher than a material forming the cable seal (542) and the housing seal (544).

8. A method (300) of manufacturing a wire seal assembly (512), comprising:
injecting a rigid polymeric material having a shore A hardness of at least 75 when cured into a mold to form a seal reinforcement device (524)
configured to be substantially rigid along a first axis (X) and flexible along a second axis (Y, Z) substantially perpendicular to the first axis (X),
wherein the seal reinforcement device (524) comprises a plurality of cylindrical sectors (534) arranged opposite one another and a plurality of resilient spring features joining the plurality of cylindrical sectors (534);
injecting a compliant polymeric material having a shore A hardness in a range of 35 to 45 when cured into a mold to form a cable seal (542) within the seal reinforcement device (524) and a housing seal (544) around the seal reinforcement device (524); **characterized in that**
the plurality of resilient spring features include a pair of flexible beams (546) that are joined at one end to form a V-shape and each of the opposite ends are attached to one of the cylindrical sectors (534).

9. The method (300) in accordance with claim 8, wherein the polymeric material is selected from a list consisting of polyamide, polybutylene terephthalate, and acrylonitrile butadiene styrene, with or without glass filling and wherein the compliant polymeric material is a silicone rubber material.

## Patentansprüche

1. Eine Drahtdichtungsanordnung (512), die konfiguriert ist, um ein Drahtkabel (538) an einem Verbindergehäuse (518) eines elektrischen Verbinders (510) abzudichten, umfassend:
eine Dichtungsverstärkungsvorrichtung (524), die konfiguriert ist, um im Wesentlichen starr entlang einer ersten Achse (X) und flexibel entlang einer zweiten Achse (Y, Z) im Wesentlichen senkrecht zu der ersten Achse (X) zu sein, wobei die Dichtungsverstärkungsvorrichtung (524) eine Vielzahl von zylindrischen Sektoren (534) umfasst, die einander gegenüberliegend angeordnet sind, und eine Vielzahl von elastischen Federmerkmalen, die die Vielzahl von zylindrischen Sektoren (534) verbinden, und
eine nachgiebige Kabeldichtung (542), die innerhalb der Dichtungsverstärkungsvorrichtung (524) angeordnet ist und konfiguriert ist, um in Druckkontakt mit dem Drahtkabel (538) zu sein; und
eine nachgiebige Gehäusedichtung (544), die die Dichtungsverstärkungsvorrichtung (524) axial umgibt und konfiguriert ist, um in Druckkontakt mit dem Verbindergehäuse (518) zu sein, **dadurch gekennzeichnet, dass**
die Vielzahl von elastischen Federmerkmalen ein Paar von flexiblen Balken (546) beinhaltet, die an einem Ende verbunden sind, um eine V-Form zu bilden, und jedes der gegenüberliegenden Enden an einem der zylindrischen Sektoren (534) befestigt ist.

2. Die Drahtdichtungsanordnung (512) gemäß Anspruch 1, wobei die Vielzahl von elastischen Federmerkmalen integral mit der Vielzahl von zylindrischen Sektoren (534) gebildet ist.

3. Die Drahtdichtungsanordnung (512) gemäß einem der vorhergehenden Ansprüche, wobei die Dichtungsverstärkungsvorrichtung (524) aus einem Material gebildet ist, das aus einer Liste ausgewählt ist, die aus Polyamid, Polybutylenterephthalat und Acrylnitril-Butadien-Styrol besteht, mit oder ohne Glasfüllung.

4. Die Drahtdichtungsanordnung (512) gemäß einem der vorhergehenden Ansprüche, wobei die Dichtungsverstärkungsvorrichtung (524) aus einem Polymermaterial mit einer Shore-A-Härte von mehr als 75 gebildet ist.

5. Die Drahtdichtungsanordnung (512) gemäß einem der vorhergehenden Ansprüche, wobei die Kabeldichtung (542) und die Gehäusedichtung (544) integral gebildet sind.

6. Die Drahtdichtungsanordnung (512) gemäß einem der vorhergehenden Ansprüche, wobei die Kabeldichtung (542) und die Gehäusedichtung (544) aus einem nachgiebigen Polymermaterial mit einer Shore-A-Härte in einem Bereich von 35 bis 45 gebildet sind.

7. Die Drahtdichtungsanordnung (512) gemäß einem der vorhergehenden Ansprüche, wobei ein Material, das die Dichtungsverstärkungsvorrichtung (524) bildet, einen Shore-A-Kabelbaum aufweist, der mindestens 20 Punkte höher ist als ein Material, das die Kabeldichtung (542) und die Gehäusedichtung (544) bildet.

8. Ein Verfahren (300) zum Herstellen einer Drahtdichtungsanordnung (512), umfassend:
Einspritzen eines starren Polymermaterials mit einer Shore-A-Härte von mindestens 75, wenn es ausgehärtet ist, in eine Form, um eine Dichtungsverstärkungsvorrichtung (524) zu bilden,
die konfiguriert ist, um im Wesentlichen starr entlang einer ersten Achse (X) und flexibel entlang einer zweiten Achse (Y, Z) im Wesentlichen senkrecht zu der ersten Achse (X) zu sein,
wobei die Dichtungsverstärkungsvorrichtung (524) eine Vielzahl von zylindrischen Sektoren (534) umfasst, die einander gegenüberliegend angeordnet sind, und eine Vielzahl von elastischen Federmerkmalen, die die Vielzahl von zylindrischen Sektoren (534) verbinden;
Einspritzen eines nachgiebigen Polymermaterials mit einer Shore-A-Härte in einem Bereich von 35 bis 45, wenn es ausgehärtet ist, in eine Form, um eine Kabeldichtung (542) innerhalb der Dichtungsverstärkungsvorrichtung (524) und eine Gehäusedichtung (544) um die Dichtungsverstärkungsvorrichtung (524) zu bilden; **dadurch gekennzeichnet, dass**
die Vielzahl von elastischen Federmerkmalen ein Paar von flexiblen Balken (546) beinhaltet, die an einem Ende verbunden sind, um eine V-Form zu bilden, und jedes der gegenüberliegenden Enden an einem der zylindrischen Sektoren (534) befestigt ist.

9. Das Verfahren (300) gemäß Anspruch 8, wobei das Polymermaterial aus einer Liste ausgewählt ist, die aus Polyamid, Polybutylenterephthalat und Acrylnitril-Butadien-Styrol besteht, mit oder ohne Glasfüllung, und wobei das nachgiebige Polymermaterial ein Silikongummimaterial ist.

## Revendications

1. Un ensemble de joint filaire (512) configuré pour former un joint entre un câble filaire (538) et un boîtier de connecteur (518) d'un connecteur électrique (510), comprenant :
un dispositif de renfort de joint (524) configuré pour être sensiblement rigide suivant un premier axe (X) et flexible le long d'un second axe (Y, Z) sensiblement perpendiculaire au premier axe (X), le dispositif de renfort de joint (524) comprenant une pluralité de secteurs cylindriques (534) disposés opposés entre eux et une pluralité d'agencements de ressort élastiques reliant la pluralité de secteurs cylindriques (534), et
un joint de câble souple (542) disposé à l'intérieur du dispositif de renfort (524) et configuré pour être en contact compressif avec le câble filaire (538) ; et
un joint de boîtier souple (544) entourant axialement le dispositif de renfort de joint (524) et configuré pour être en contact compressif avec le boîtier de connecteur (518), **caractérisé en ce que**
la pluralité d'agencements de ressort élastiques comprennent une paire de bras flexibles (546) qui sont reliés à une extrémité pour former une forme en V et dont chacun des bords opposés est fixé à l'un des secteurs cylindriques (534).

2. L'ensemble de joint filaire (512) selon la revendication 1, dans lequel la pluralité d'agencements de ressort élastiques sont formés monobloc avec la pluralité de secteurs cylindriques (534).

3. L'ensemble de joint filaire (512) selon l'une des revendications précédentes, dans lequel le dispositif de renfort de joint (524) est formé d'un matériau choisi dans une liste constituée par le polyamide, le poly(téréphtalate de polybutylène), et l'acrylonitrile-butadiène-styrène, chargés ou non de fibres de verre.

4. L'ensemble de joint filaire (512) selon l'une des revendications précédentes dans lequel le dispositif de renfort de joint (524) est formé d'un matériau polymère ayant une dureté Shore A supérieure à 75.

5. L'ensemble de joint filaire (512) selon l'une des revendications précédentes dans lequel le joint de câble (542) et le joint de boîtier (544) sont formés monobloc.

6. L'ensemble de joint filaire (512) selon l'une des revendications précédentes dans lequel le joint de câble (542) et le joint de boîtier (544) sont formés d'un matériau polymère souple ayant une dureté Shore A dans une plage allant de 35 à 45.

7. L'ensemble de joint filaire (512) selon l'une des revendications précédentes, dans lequel un matériau formant le dispositif de renfort de joint (524) a une dureté Shore A supérieure d'au moins 20 points à celle d'un matériau formant le joint de câble (542) et le joint de boîtier (544).

8. Un procédé (300) de fabrication d'un ensemble de joint filaire (512), comprenant :
l'injection dans un moule d'un matériau polymère rigide ayant lorsqu'il est durci une dureté Shore A d'au moins 75, pour former un dispositif de renfort de joint (524) configuré pour être sensiblement rigide le long d'un premier axe (X) et flexible le long d'un second axe (Y, Z) sensiblement perpendiculaire au premier axe (X),
dans lequel le dispositif de renfort de joint (524) comprend une pluralité de secteurs cylindriques (534) disposés opposés entre eux et une pluralité d'agencements de ressort élastiques reliant la pluralité de secteurs cylindriques (534) ;
l'injection dans un moule d'un matériau polymère souple ayant lorsqu'il est durci une dureté Shore A dans une plage allant de 35 à 45, pour former un joint de câble (542) à l'intérieur du dispositif de renfort de joint (524) et un joint de boîtier (544) autour du dispositif de renfort de joint (524) ; **caractérisé en ce que**
la pluralité d'agencements de ressort élastiques comprennent une paire de bras flexibles (546) qui sont reliés à l'une de leurs extrémités pour former une forme en V et dont chacun des bords opposés est fixé à l'un des secteurs cylindriques (534).

9. Le procédé (300) selon la revendication 8, dans lequel le matériau polymère est choisi dans une liste constituée par le polyamide, le poly(téréphtalate de polybutylène), et l'acrylonitrile-butadiène-styrène, chargés ou non de fibres de verre, et dans lequel le matériau polymère souple est un matériau de caoutchouc de silicone.
